(19) Europäisches Patentamt / European Patent Office / Office européen des brevets

(11) **EP 4 473 651 B1**

(12) **FASCICULE DE BREVET EUROPEEN**

(45) Date de publication et mention
de la délivrance du brevet:
**22.07.2026 Bulletin 2026/30**

(21) Numéro de dépôt: **23702608.3**

(22) Date de dépôt: **03.02.2023**

(51) Classification Internationale des Brevets (IPC):
***H02S 50/10*** *(2014.01)*

(52) Classification Coopérative des Brevets (CPC):
**H02S 50/10**

(86) Numéro de dépôt international:
**PCT/EP2023/052737**

(87) Numéro de publication internationale:
**WO 2023/148353 (10.08.2023 Gazette 2023/32)**

(54) **DISPOSITIF ET PROCÉDÉ D'ESTIMATION DE LA SALISSURE DE PANNEAUX PHOTOVOLTAÏQUES**

VORRICHTUNG UND VERFAHREN ZUR ABSCHÄTZUNG DER VERSCHMUTZUNG VON PHOTOVOLTAIKTAFELN

DEVICE AND METHOD FOR ESTIMATING THE SOILING OF PHOTOVOLTAIC PANELS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **04.02.2022 FR 2201007**

(43) Date de publication de la demande:
**11.12.2024 Bulletin 2024/50**

(73) Titulaire: **Commissariat à l'Energie Atomique et aux Energies Alternatives**
**75015 Paris (FR)**

(72) Inventeurs:
• **PILAT, Eric**
**38054 Grenoble Cedex 09 (FR)**
• **MONNA, Rémi**
**38054 Grenoble Cedex 09 (FR)**

(74) Mandataire: **Hautier IP**
**20, rue de la Liberté**
**06000 Nice (FR)**

(56) Documents cités:
**CN-A- 110 266 269     US-A1- 2017 338 771**

**Description**

DOMAINE TECHNIQUE DE L'INVENTION

La présente invention concerne l'estimation de la salissure de panneaux photovoltaïques, notamment des panneaux à cellules photovoltaïques, et plus particulièrement l'estimation de l'impact de la salissure sur la production énergétique photovoltaïque à partir de tels panneaux.

ETAT DE LA TECHNIQUE

Actuellement, on utilise des panneaux munis de modules photovoltaïques pour produire de l'énergie électrique en convertissant une partie du rayonnement solaire grâce à des cellules photovoltaïques. Ces panneaux sont situés en milieu extérieur pour recevoir un maximum de rayonnement solaire et sont susceptibles d'être encrassés en raison de la neige, de la saleté, de la poussière et d'autres particules, par exemple des fientes d'oiseaux, qui peuvent recouvrir la surface des modules photovoltaïques. Cet encrassement peut entraîner des pertes de production énergétique, appelées pertes de salissure, ou « soiling loss » en langue anglaise. Les documents CN 110 266 269 et US 2017/338771 A1 décrivent des procédures d'estimation de la salissure de panneaux photovoltaïques .

Les panneaux photovoltaïques subissent un encrassement plus ou moins important en fonction de différents paramètres, en particulier leurs localisations géographiques et leurs modes d'implantation, notamment leur inclinaison. Cet encrassement affecte l'efficacité des panneaux, ce qui impacte directement la production énergétique.

On peut estimer un encrassement des panneaux photovoltaïques en utilisant des ensembles de mesure de salissure (appelés « soiling kit » en langue anglaise). Par exemple, on peut citer les documents de brevet US10720882, WO2020/144618, US10337201, WO2014/061967, US10554171, et CN110266269, qui divulguent une utilisation de tels ensembles de mesure de salissure. Un tel ensemble comporte un premier panneau, dit encrassé, et un deuxième panneau, dit propre, et l'on peut comparer la production de courants fournis par les deux panneaux pour estimer l'impact de la salissure sur le panneau encrassé. En particulier, on mesure les courants fournis par les panneaux mis en court-circuit, le courant mesuré étant proportionnel au rayonnement photonique incident capté par les cellules des panneaux photovoltaïques. Par exemple, certains ensembles utilisent un panneau propre nettoyé périodiquement pendant que l'autre panneau va progressivement s'encrasser. Par ailleurs un dispositif électronique mesure les courants fournis par les panneaux photovoltaïques et un ratio entre les deux courants mesurés est calculé. Le ratio permet de quantifier un taux de salissure, également appelé « soiling ratio » en langue anglaise. En outre, d'autres ensembles utilisent une protection du panneau propre à l'aide d'un couvercle qui s'ouvre le temps de réaliser les mesures de courants nécessaires. D'autres ensembles protègent le panneau propre à l'aide d'un tiroir dans lequel le panneau propre est logé et qui est placé sous le panneau encrassé exposé au rayonnement. Le tiroir s'ouvre et le panneau propre est exposé sur le côté au moment de la mesure. Cependant, ces ensembles ne permettent pas d'estimer une répartition des salissures sur des panneaux photovoltaïques, notamment si la salissure est répartie de façon homogène ou si elle est dispersée sur une ou plusieurs zones du panneau. Un manque de connaissance de la répartition des salissures peut engendrer des erreurs graves dans le diagnostic et l'évaluation de l'impact des salissures sur la production énergétique, en particulier dans le cas de salissures concentrées sur certaines zones, par exemple dans le cas de fientes d'oiseaux ou de résidus de pluie boueuse... Par ailleurs, les panneaux propres et encrassés des ensembles de mesure de salissure sont identiques aux panneaux destinés à produire l'électricité d'une centrale de production énergétique, ce qui en fait des panneaux lourds et encombrant et entraîne des coûts de fabrication et de maintenance non négligeables.

On peut citer, par exemple, le brevet indien IN201941047730 qui divulgue une méthode pour optimiser le nettoyage des modules en fournissant une estimation des pertes induites par des salissures. La méthode utilise un système d'acquisition et de contrôle des données fournies par les panneaux, un centre d'opérations à distance, une station météorologique et à un système d'ingénierie des connaissances. Mais une telle méthode est complexe à mettre en œuvre.

On peut également citer la demande internationale WO2019/158982 qui divulgue un appareil de détection de salissures basée sur une évolution relative d'un signal électrique dans le temps. Mais l'appareil ne permet pas d'identifier une répartition des salissures sur un panneau photovoltaïque.

On peut citer le brevet coréen KR10-2262361, qui divulgue un dispositif comprenant quatre capteurs de mesure de quantité de lumière solaire incidente (appelés unités de mesure du degré de salissure). Les capteurs sont situés, en haut, en bas, à gauche et à droite d'un panneau photovoltaïque. Un capteur est similaire à un module du panneau. Le dispositif comporte une unité de calcul d'un niveau de salissure par comparaison des mesures des capteurs avec une valeur de référence stockée dans une base de données. Le dispositif permet de calculer quatre niveaux de salissure pour quatre endroits distincts du panneau photovoltaïque. Mais le dispositif n'est pas suffisamment précis, car il ne prend pas en considération l'encrassement du panneau photovoltaïque lui-même.

Un objet de l'invention consiste à pallier ces inconvénients, et plus particulièrement à fournir des moyens d'estimation de production énergétique qui sont simples à réaliser et à mettre en œuvre et qui sont suffisamment précis.

RESUME DE L'INVENTION

Pour atteindre cet objectif, il est proposé un dispositif d'estimation de la salissure de panneaux photovoltaïques, comprenant des première et deuxième unités, chaque unité comprenant au moins deux zones de réception d'un rayonnement solaire, chaque zone comprenant au moins un module photovoltaïque, le dispositif comprenant un système de protection mobile entre une position de protection dans laquelle le système de protection est configuré pour masquer lesdits au moins deux zones de la deuxième unité et une position de mesure dans laquelle lesdits au moins deux zones de la deuxième unité sont exposées à un rayonnement solaire, et une unité de commande électronique configurée pour recevoir un courant fourni par chaque module photovoltaïques.

Les unités comportent un même nombre de zones de réception, les modules photovoltaïques de la première unité présentent des caractéristiques identiques, notamment en termes de taille et de nombre de cellules photovoltaïques, à celles des modules photovoltaïques de la deuxième unité, l'unité de commande électronique est configurée pour calculer, pour chaque zone de la première unité, un paramètre relatif à un taux de perte de transmission de courant à partir d'un rapport entre le courant fourni par ledit au moins un module photovoltaïque de la zone de la première unité et le courant fourni par ledit au moins un module photovoltaïque d'une zone de la deuxième unité, et l'unité de commande électronique est configurée pour déterminer au moins un paramètre relatif à une répartition de salissures sur la première unité à partir d'au moins une comparaison entre deux taux de perte de transmission de courant.

Ainsi, on fournit un dispositif permettant de fournir une estimation de l'impact des salissures sur des panneaux photovoltaïques, notamment en fournissant une estimation suffisamment précise. En particulier, le dispositif permet de différencier une répartition des salissures homogène d'une répartition localisée. En outre, le dispositif permet d'estimer une absence de salissures. Le dispositif permet de déterminer une répartition des salissures sur un panneau sale en vue d'estimer une répartition des salissures d'un panneau dit de production énergétique d'une centrale dans un environnement particulier.

Selon un autre aspect, il est proposé un système d'estimation de production énergétique photovoltaïque, comprenant le dispositif d'estimation de la salissure de panneaux photovoltaïques tel que défini ci-avant, dans lequel l'unité de commande électronique du dispositif d'estimation est configurée pour calculer une perte de courant de la première unité à partir dudit au moins un paramètre relatif à une répartition de salissures sur la première unité.

Ainsi, on peut estimer de façon améliorée une production énergétique photovoltaïque en tenant compte de l'impact des salissures.

Selon un autre aspect, il est proposé une centrale photovoltaïque comprenant une pluralité de panneaux de production, chaque panneau de production comprenant au moins un module photovoltaïque, dit de production, destiné à produire de l'électricité, la centrale photovoltaïque comprenant au moins un dispositif d'estimation tel que défini ci-avant.

Selon un autre aspect, il est proposé un procédé d'estimation de la salissure de panneaux photovoltaïques utilisant un dispositif d'estimation tel que défini ci-avant.

Le procédé comporte une étape initiale dans laquelle le système de protection est dans la position de mesure, une étape de mesure des courants fournis par chaque module photovoltaïque des première et deuxième unités, une étape de calcul, pour chaque zone de la première unité, d'un paramètre relatif à un taux de perte de transmission de courant à partir d'un rapport entre le courant fourni par ledit au moins un module photovoltaïque de la zone de la première unité et le courant fourni par ledit au moins un module photovoltaïque d'une zone de la deuxième unité, et une étape de détermination d'au moins un paramètre relatif à une répartition de salissures sur la première unité à partir d'au moins une comparaison entre deux taux de perte de transmission de courant.

Selon un autre aspect, il est proposé un procédé d'estimation de production énergétique photovoltaïque, comprenant une estimation de la salissure de panneaux photovoltaïques selon le procédé tel que défini ci-avant, et un calcul d'une perte de courant de la première unité à partir dudit au moins un paramètre relatif à une répartition de salissures sur la première unité.

Selon encore un autre aspect, il est proposé un produit programme d'ordinateur comprenant des instructions qui, lorsqu'elles sont exécutées par une unité de commande électronique, permettent à l'unité de commande électronique d'effectuer les étapes du procédé d'estimation de la salissure de panneaux photovoltaïques tel que défini ci-avant.

BREVE DESCRIPTION DES FIGURES

Les buts, objets, ainsi que les caractéristiques et avantages de l'invention ressortiront mieux de la description détaillée de modes de réalisation et de mise en œuvre de cette dernière, illustrés par les dessins d'accompagnement suivants dans lesquels :

La figure 1, illustre de façon schématique un mode de réalisation d'un dispositif d'estimation de production énergétique photovoltaïque ;

La figure 2, illustre de façon schématique un autre mode de réalisation d'un dispositif d'estimation de production énergétique photovoltaïque ;

La figure 3, illustre schématiquement un état propre de la première unité d'un dispositif d'estimation de production énergétique photovoltaïque ;

La figure 4, illustre schématiquement une répartition homogène des salissures ;

Les figures 5 à 7, illustrent de façon schématique différentes répartitions localisées des salissures

La figure 8, illustre de façon schématique une répartition localisée privilégiée des salissures ; et

La figure 9, illustre de façon schématique les principales étapes d'un mode de mise en œuvre d'un procédé d'estimation de production énergétique photovoltaïque.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement.

Selon un exemple,

- l'unité de commande électronique est en outre configurée pour calculer une moyenne des taux de perte de transmission de courant, et pour déterminer une répartition homogène des salissures lorsque la moyenne est strictement supérieure à un seuil principal, dit seuil principal de salissures, et un état propre de la première unité, dépourvu de salissures, lorsque la moyenne est inférieure ou égale au seuil principal de salissures.
- L'unité de commande électronique est configurée pour calculer au moins un écart de taux, chaque écart de taux correspondant à une différence entre deux taux de perte de transmission de courant desdits au moins deux zones de la première unité, l'unité de commande électronique étant en outre configurée pour déterminer une répartition localisée des salissures lorsqu'au moins un écart de taux est strictement supérieur à un deuxième seuil, dit deuxième seuil de salissures.
- Chaque unité comprend une première zone dite supérieure et des deuxième et troisième zones dites inférieures, l'unité de commande électronique est en outre configurée pour déterminer une répartition localisée privilégiée sur les zones inférieures de la première unité lorsque l'écart de taux entre les deux zones inférieures est inférieur ou égal à un troisième seuil, dit troisième seuil de salissures.
- Chaque unité comprend une quatrième zone, dite intermédiaire, située entre la première zone et les deuxième et troisième zones.
- Les modules photovoltaïques des unités du dispositif d'estimation ont des tailles inférieures ou égales à celles des modules photovoltaïques de production de la centrale.
- L'étape de calcul comprend un calcul d'une moyenne des taux de perte de transmission de courant, et l'étape de détermination comprend une identification d'une répartition homogène des salissures lorsque la moyenne est strictement supérieure à un seuil principal, dit seuil principal de salissures, et d'un état propre de la première unité, dépourvu de salissures, lorsque la moyenne est inférieure ou égale au seuil principal de salissures.
- L'étape de calcul comprend un calcul d'au moins un écart de taux, chaque écart de taux correspondant à une différence entre deux taux de perte de transmission de courant desdits au moins deux zones de la première unité, et l'étape de détermination comprend une identification d'une répartition localisée des salissures lorsqu'au moins un écart de taux est strictement supérieur à un deuxième seuil, dit deuxième seuil de salissures.
- Chaque unité du dispositif d'estimation comprend une première zone dite supérieure et des deuxième et troisième zones dites inférieures, et l'étape de détermination comprend une identification d'une répartition localisée privilégiée sur les zones inférieures de la première unité lorsque l'écart de taux entre les deux zones inférieures est inférieur ou égal à un troisième seuil, dit troisième seuil de salissures.

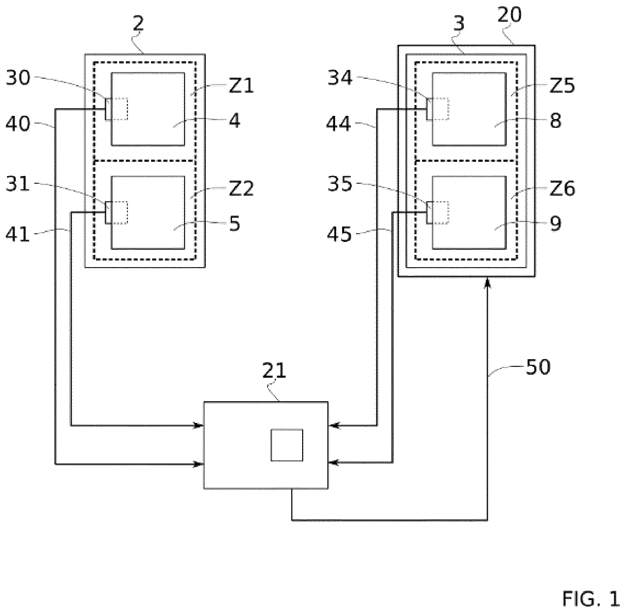

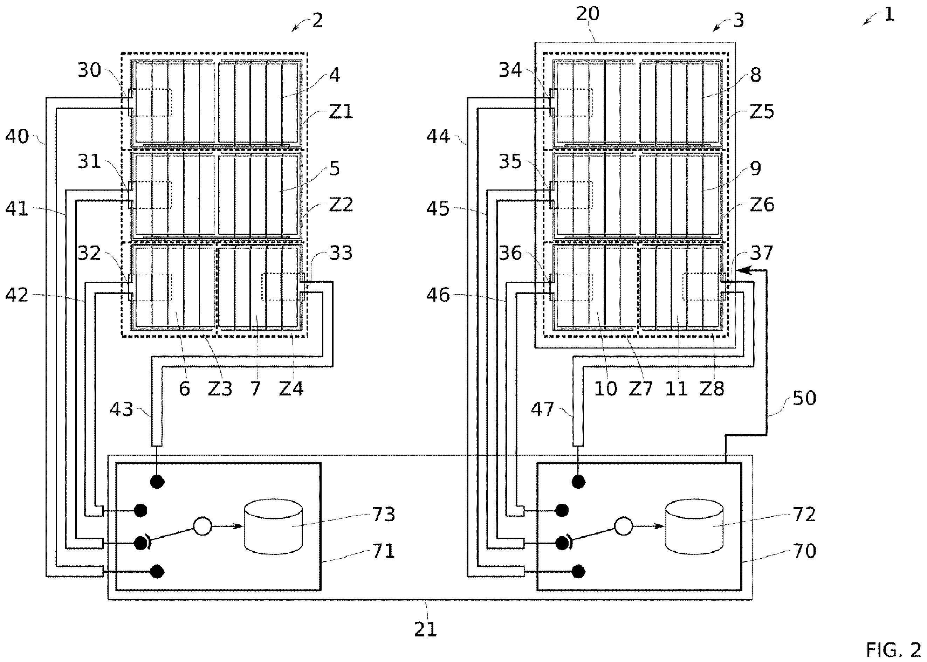

Sur les figures 1 et 2, on a représenté un dispositif 1 d'estimation de production énergétique photovoltaïque. Le dispositif 1 est destiné à estimer une qualité de production énergétique fournie par une centrale solaire, en particulier une centrale équipée de panneaux munis de modules photovoltaïques. Plus particulièrement, le dispositif 1 d'estimation est destiné à estimer l'impact des salissures sur la production énergétique de la centrale. Le dispositif 1 est en outre adapté pour estimer un taux de salissures des panneaux de la centrale destinés à produire de l'énergie. Ces panneaux destinés à produire l'énergie sont qualifiés de panneaux photovoltaïques de production.

De manière générale, le dispositif 1 comprend des première et deuxième unités 2, 3. Chaque unité 2, 3 comprend au moins deux zones Z1 à Z8 de réception d'un rayonnement solaire. Chaque zone Z1 à Z8 comprend au moins un module photovoltaïque 4 à 11. De préférence, chaque zone Z1 à Z8 comporte un seul module 4 à 11, et ainsi chaque module 4 à 11 caractérise une zone déterminée de l'unité 2, 3.

Sur la figure 1, on a représenté un mode de réalisation des première et deuxième unités 2, 3. La première unité 2 comprend une première zone de réception Z1 située dans une partie supérieure de la première unité 2 et une deuxième zone de réception Z2 située dans la partie inférieure de la première unité 2. La deuxième unité 3 comprend une première zone de réception Z5 située dans une partie supérieure de la deuxième unité 3 et une deuxième zone de réception Z6 située dans la partie inférieure de la deuxième unité 3. De préférence, la première unité 2 comprend quatre zones Z1 à Z4. Une première zone Z1 située dans le tiers supérieur de la première unité 2, une deuxième zone Z2 située entre le tiers inférieur et le tiers supérieur de la première unité 2, une troisième zone Z3 située dans la moitié gauche du tiers inférieur de la première unité 2, et une quatrième zone Z4 située dans la moitié droite du tiers inférieur de la première unité 2. De préférence, la deuxième unité 3 comprend une même configuration que celle de la première unité 2. En d'autres termes, la deuxième unité 2 comprend quatre zones Z5 à Z8. Une première zone Z5 située dans le tiers supérieur de la deuxième unité 3, une deuxième zone Z6 située entre le tiers inférieur et le tiers supérieur de la deuxième unité 3, une troisième zone Z7 située dans la moitié gauche du tiers inférieur de la deuxième unité 3, et une quatrième zone Z8 située dans la moitié droite du tiers inférieur de la deuxième unité 3.

Un module photovoltaïque 4 à 11 comporte une ou plusieurs cellules photovoltaïques pour convertir une partie du rayonnement solaire 14,15 en énergie électrique. Les cellules photovoltaïques d'un même module peuvent être reliées électriquement en parallèle, de préférence elles sont reliées électriquement en série. En particulier, lorsque les cellules sont connectées en série, c'est la plus faible qui plafonne le courant du module.

Chaque unité 2, 3 comporte une face avant et une face arrière. Plus particulièrement, une unité 2, 3 peut être formée par un ensemble multicouches comprenant des cellules photovoltaïques. L'ensemble multicouches peut comprendre une première couche de protection transparente au rayonnement solaire formant la face avant de l'unité 2, 3, et une deuxième couche de protection formant la face arrière de l'unité 2, 3. Les couches de protection peuvent être au contact de l'air ambiant. Les cellules photovoltaïques sont situées entre les première et deuxième couches de protection et sont en général encapsulées dans un matériau polymère, dit matériau encapsulant, tel que de l'éthylène-acétate de vinyle ou EVA. En outre, les première et deuxième couches de protection peuvent être en verre ou en polymère. De manière générale, l'ensemble multicouches peut être fabriqué par l'intermédiaire d'une étape de pressage à chaud.

De préférence, un module photovoltaïque 4 à 11 comporte plusieurs cellules photovoltaïques reliées électriquement entre elles de sorte à former une guirlande de cellules photovoltaïques.

Dans le cadre de la demande de brevet, un module photovoltaïque 4 à 11 ne correspond pas à l'unité finalisée 2, 3 comprenant deux couches de protection au contact de l'air ambiant et encapsulant les cellules photovoltaïques. De manière générale, l'unité 2, 3 peut être appelée panneau photovoltaïque.

Les modules 4 à 11 peuvent comprendre, chacun, plusieurs diodes dites de sécurité, par exemple trois diodes par module, de manière à former une guirlande de cellules photovoltaïque couplée à une diode de sécurité. En outre, lorsqu'une cellule est impactée par une salissure, le courant fourni par le module, appelé également courant de court-circuit, va baisser proportionnellement à la baisse de transmission photonique. Par contre au-delà d'un certain seuil qui dépend des caractéristiques des diodes de sécurité (en général 40 % de la surface d'une cellule ombrée totalement), le courant va shunter la guirlande dont fait partie la cellule impactée en passant par la diode de sécurité. Dès lors, le courant de court-circuit du module va remonter à son niveau d'origine, alors que la production énergétique sera elle, fortement impacté par la chute de tension (33 % lorsqu'un module comprend trois diodes de sécurité). Ainsi, en utilisant des première et deuxième unités 2, 3 ayant, chacune, au moins deux modules 4 à 11, lorsqu'un module est impacté par une salissure, la baisse du courant du module n'impacte pas le courant fourni pas les autres modules.

Par ailleurs, le dispositif 1 comprend un système de protection 20, en particulier contre les salissures. Le système de protection 20 est configuré pour protéger la deuxième unité 3 contre les salissures. Au contraire, la première unité 2 est dépourvue de système de protection 20. En d'autres termes, la première unité 2 est placée dans des conditions environnementales similaires à celles des panneaux photovoltaïques de production de la centrale dont on souhaite estimer la production d'énergie. De façon générale, le système de protection 20 est mobile entre une position de protection dans laquelle le système de protection 20 est configuré pour masquer les zones Z5 à Z8 de la deuxième unité 3 et une position de mesure dans laquelle les zones Z5 à Z8 de la deuxième unité 3 sont exposées à un rayonnement solaire. Ainsi, le système de protection 20 permet de maintenir la deuxième unité 3 dans un état propre, c'est-à-dire un état dépourvu de salissures qui pourraient être présentes sur les modules photovoltaïques 8 à 11 de la deuxième unité 3. Le système de protection 20 peut être un écran, en particulier un écran mobile pouvant être déployé et rétracté entre les positions de mesure et de protection. L'écran peut être en partie ou entièrement, opaque, transparent ou translucide au rayonnement solaire. En variante, le système de protection 20 peut être un tiroir configuré pour loger la deuxième unité 3 et monté mobile en translation à l'arrière d'un châssis de protection, entre la position de protection où le tiroir est placé en arrière du châssis de protection et le châssis de protection masque la deuxième unité 3, et la position de mesure où le tiroir est placé à côté du châssis de protection et la deuxième unité 3 est exposée au rayonnement solaire.

En outre, le dispositif 1 comporte une unité de commande électronique 21 configurée pour recevoir un courant fourni par chaque module photovoltaïque 4 à 11. De façon générale, l'unité de commande électronique 21 est configurée pour mesurer le courant fourni par chacun des modules 4 à 11, et plus particulièrement pour mesurer les courants de manière successive. Le dispositif 1 comporte un premier dispositif de sélection 70 configuré pour mesurer successivement les courants fournis par les modules 4 à 7 de la première unité 2, et un deuxième dispositif de sélection 71 configuré pour mesurer successivement les courants fournis par les modules 8 à 11 de la deuxième unité 2. En outre, les dispositifs de sélection 70, 71 peuvent être couplés respectivement à des mémoires 72, 73 de l'unité de commande électronique 21 pour enregistrer les courants mesurés. Avantageusement, l'unité de commande électronique est configurée pour réaliser les mesures des courants dans un temps inférieur au millième de seconde, de sorte que l'on peut considérer que les mesures sont réalisées quasi simultanément. Par ailleurs, chaque module photovoltaïque 4 à 11 produit un courant électrique proportionnel au rayonnement solaire reçu. En d'autres termes, le courant fourni par un module 4 à 11 est proportionnel aux photons impactant les cellules photovoltaïques du module 4 à 11. Plus particulièrement, chaque module 4 à 11 comporte un connecteur 30 à 37 pour coupler électriquement le module 4 à 11, par une connexion 40 à 47, à l'unité de commande électronique 21. Par exemple, les connecteurs 30 à 37 peuvent être respectivement des boites de jonction. Un connecteur 30 à 37 fournit le courant électrique produit par le module 4 à 11 à l'unité de commande électronique 21.

Avantageusement, l'unité de commande électronique 21 est couplée, par une connexion 50, au système de protection 20 de manière à commander le système de protection 20 pour passer de la position de protection à la position de mesure, et inversement. L'unité de commande électronique 21 peut être une carte de circuits imprimés comprenant des composants électroniques aptes à effectuer des opérations logiques. L'unité de commande électronique 21 peut être un ordinateur.

Par ailleurs, l'unité de commande électronique 21 est configurée pour déterminer au moins un paramètre relatif à une répartition de salissures sur la première unité 2. L'estimation pourra servir pour estimer une répartition des salissures sur les panneaux photovoltaïques de production d'une centrale photovoltaïque, c'est-à-dire une centrale de production énergétique photovoltaïques. En particulier, une centrale photovoltaïque comprend une pluralité de panneaux de production. Chaque panneau de production comprend au moins un module photovoltaïque, dit de production, destiné à produire de l'électricité. Le dispositif 1 est configuré pour déterminer un état d'encrassement de la première unité 2, en vue d'estimer un état d'encrassement des panneaux de production de la centrale. On entend par état d'encrassement, une répartition de salissure.

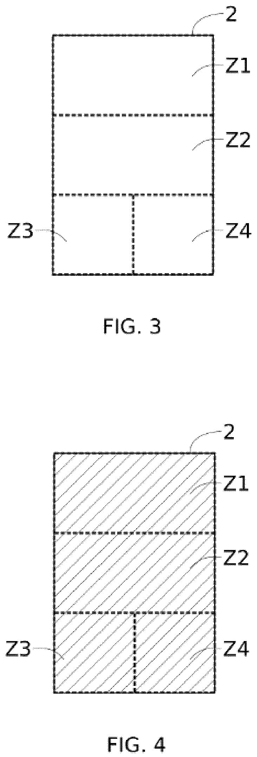

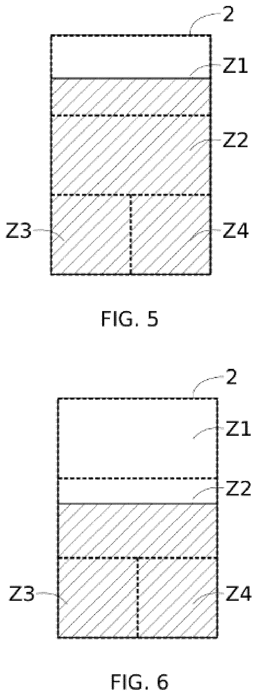

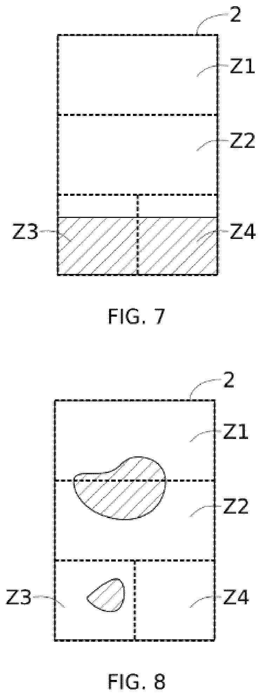

On a représenté sur les figures 3 à 8, différents types de répartition de salissures. En particulier, on a représenté sur les figures 3 à 8 des salissures par des parties hachurées, et une absence de salissures par des parties non hachurées. Sur la figure 3, la première unité 2 est dans un état propre, c'est-à-dire que la première unité 2 est dépourvue de salissures sur ses zones de réception Z1 à Z4. Sur la figure 4, on a représenté une première configuration dans laquelle la répartition est dite homogène, c'est-à-dire que les salissures sont présentes sur toutes les zones de réception Z1 à Z4 de la première unité 2, et sont réparties de façon homogène sur toutes les zones Z1 à Z4. Dans ce cas, la perte de courant est directement proportionnelle à la perte optique de transmission. La perte optique dépend principalement de la réponse spectrale de la cellule en combinaison avec le filtre spectral généré par la salissure. Sur les figures 5 à 7, on a représenté une deuxième configuration dans laquelle la répartition est dite localisée privilégiée, c'est-à-dire que les salissures ne sont pas présentes sur une partie supérieure de la première unité 2. La répartition localisée privilégiée est due à l'inclinaison de la première unité par rapport au sol qui favorise un déplacement des salissures vers la partie inférieure de la première unité 2. En effet, sous l'effet d'un nettoyage provoqué par une rosée, une pluie légère, etc., la salissure se concentre sur la partie inférieure du module. Pour un module 4 à 11 où les cellules photovoltaïques sont montées en orientation paysage, c'est-à-dire que trois guirlandes sont placées horizontalement les unes au-dessous des autres, la perte de courant peut-être de 33 % car les salissures placées sur la partie inférieure n'impactent qu'une seule des trois guirlandes, en l'occurrence la plus inférieure des trois. Par ailleurs, si les cellules photovoltaïques sont montées en orientation portrait, c'est-à-dire que trois guirlandes sont placées verticalement les unes à côté des autres, la perte de courant peut-être de 100 % car les salissures placées sur la partie inférieure impactent les trois guirlandes. Sur la figure 8, on a représenté une troisième configuration dans laquelle la répartition est dite localisée par tache, c'est-à-dire que les salissures correspondent à une tache située sur une zone de réception, ou à cheval sur deux zones adjacentes, de la première unité 2. La répartition localisée par tache va dépendre de la baisse de courant sur la cellule la plus impactée. La répartition localisée par tache va également dépendre du fait que si la baisse de courant est trop importante, la cellule va alors subir une tension inverse, provoquant le court-circuit de toute la guirlande de cellules aux bornes d'une diode de sécurité. Dans le cas où les modules 4 à 11 sont équipés de trois diodes de sécurité, la perte de production pour une cellule gravement impactée sera de l'ordre de 33 %.

Afin de déterminer au moins un paramètre relatif à une répartition de salissures sur la première unité 2, l'unité de commande électronique 21 est configurée pour calculer, pour chaque zone Z1 à Z4 de la première unité 2, un paramètre relatif à un taux de perte de transmission de courant. Par exemple, le paramètre relatif à une répartition de salissures peut être la répartition de salissures telle que définie ci-avant, c'est-à-dire une répartition homogène, localisée privilégiée, ou localisée par tache. Par ailleurs, le paramètre relatif à un taux de perte de transmission de courant peut être, par exemple, le taux de perte de transmission de courant $TL(Z_i)$. Le taux $TL(Z_i)$ correspond à la perte de transmission d'une zone de réception Zi de la première unité du fait de la présence de salissures sur cette zone Zi. La référence Zi correspond à l'une des zones de réception Z1 à Z4 de la première unité 2, où i est un nombre entier représentant le numéro d'une zone de réception Z1 à Z4 de la première unité 2. Par exemple, lorsque la première unité 2 comprend quatre zones Z1 à Z4, i est compris entre 1 et 4. Le taux TL(Zi) est donc associé à une zone de réception Z1 à Z4 de la première unité 2. En particulier, on calcule le taux TL(Zi) à partir d'un rapport entre le courant fourni par le ou les modules photovoltaïques de la zone Z1 à Z4 de la première unité 2 et le courant fourni par le ou les modules photovoltaïques d'une zone Z5 à Z8 de la deuxième unité 3.

Par exemple, on calcule TL(Zi) à partir de l'équation (1) suivante :

$$TL(Zi) = 1- ( I(Zi)/I(Zj) ) \text{ (équation 1)}$$

où :

TL(Zi) est le taux de perte de transmission de courant d'une zone Zi de la première unité 2 (sans unité) ;
I(Zi) est le courant (en Ampère) fourni par le ou les modules de la zone Zi de la première unité 2 ;
I(Zj) est le courant (en Ampère) fourni par le ou les modules d'une zone Z5 à Z8 de la deuxième unité 3. La référence Zj correspond à l'une des zones de réception Z5 à Z8 de la deuxième unité 3, où j est un nombre entier représentant le numéro d'une zone de réception Z5 à Z8 de la deuxième unité 3. Par exemple, lorsque la deuxième unité 3 comprend quatre zones Z5 à Z8, j est compris entre 5 et 8. De préférence, les première et deuxième unités 2, 3 comportent un même nombre de zones de réception. Sur la figure 1, on a représenté un mode de réalisation dans lequel les unités 2, 3 comprennent respectivement deux zones Z1, Z2 ; Z5, Z6. Sur les figures 2 à 8, on a représenté un autre mode de réalisation dans lequel les unités comprennent respectivement quatre zones Z1 à Z4 ; Z5 à Z8.

En outre, l'unité de commande électronique 21 est configurée pour comparer deux taux de perte de transmission de courant TL(Zi).

En particulier, l'unité de commande électronique 21 détermine une répartition de salissures en fonction d'au moins une comparaison entre deux taux TL(Zi) calculés.

Par exemple, l'unité de commande électronique 21 calcule une moyenne TLm (sans unité) des taux de perte de transmission de courant TL(Zi). Lorsque la première unité 2 comporte quatre zones distinctes Z1 à Z4, la moyenne TLm peut être calculée selon l'équation (2) suivante :

$$TLm = ( TL(Z1) + TL(Z2) + TL(Z3) + TL(Z4) ) / 4 \text{ (équation 2)}.$$

En outre, l'unité de commande électronique 21 détermine une répartition homogène des salissures lorsque la moyenne TLm est strictement supérieure à un seuil principal A1, dit seuil principal de salissures, et un état propre de la première unité 2 lorsque la moyenne TLm est inférieure ou égale au seuil principal de salissures A1. Par exemple, le seuil principal de salissures A1 peut être choisi proche de zéro, par exemple le seuil principal A1 est égal à 0,1. Dans ce cas, la comparaison entre la moyenne TLm et le seuil principal de salissures A1 correspond à une comparaison entre deux taux TL(Zi).

Avantageusement, l'unité de commande électronique 21 est configurée pour calculer au moins un écart de taux DTL(Zi,Zm). Un écart de taux DTL(Zi,Zm) correspond à une différence entre deux taux de perte de transmission de courant de deux zones Z1 à Z4 de la première unité (2). En d'autres termes, on peut calculer un écart de taux DTL(Zi,Zm) selon l'équation (3) suivante :

$$DTL(Zi,Zm) = TL(Zi) – TL(Zm) \text{ (équation 3)}$$

où :

TL(Zi) est le taux de perte de transmission de courant d'une zone Zi de la première unité 2 (sans unité) , et
TL(Zm) est le taux de perte de transmission de courant d'une autre zone Zm de la première unité 2 (sans unité). En particulier, la zone Zm est distincte de la zone Zi. En outre, m est un nombre entier représentant le numéro d'une zone de réception Z1 à Z4 de la première unité 2.

L'unité de commande électronique 21 est en outre configurée pour déterminer une répartition localisée des salissures lorsqu'au moins un écart de taux DTL(Zi,Zm) est strictement supérieur à un deuxième seuil A2, dit deuxième seuil de salissures. Par exemple, le deuxième seuil de salissures A2 peut être choisi proche de zéro, par exemple le deuxième seuil de salissures A2 est égal à 0,1. Dans ce cas, la comparaison entre les écarts de taux DTL(Zi,Zm) et le deuxième seuil de salissures A2 correspond à une comparaison entre deux taux TL(Zi).

Afin de pouvoir déterminer une répartition localisée privilégiée des salissures sur la première unité 2, chaque unité 2, 3 comprend une première zone Z1, Z5 dite supérieure et des deuxième et troisième zones Z3, Z4 et Z7, Z8 dites inférieures. L'unité de commande électronique 21 est en outre configurée pour déterminer une répartition localisée privilégiée sur les zones inférieures Z3, Z4 de la première unité 2 lorsque l'écart de taux DTL(Zi,Zm) entre les deux zones inférieures Z3, Z4 est inférieur ou égal à un troisième seuil, dit troisième seuil de salissures.

En d'autres termes, l'unité de commande électronique 21 calcule l'écart de taux DTL(Z3,Z4), selon l'équation DTL(Z3,Z4) = TL(Z3) - TL(Z4), et compare l'écart de taux calculé DTL(Z3,Z4) avec le troisième seuil.

Par exemple, le troisième seuil de salissures peut être choisi proche de zéro, par exemple le troisième seuil de salissures est égal à 0,1. Dans ce cas, la comparaison entre l'écart de taux DTL(Z3,Z4) et le troisième seuil de salissures correspond à une comparaison entre deux taux TL(Zi).

Dans le cas où au moins un écart de taux DTL(Zi,Zm) est strictement supérieur au deuxième seuil A2, et que l'écart de taux DTL(Z3,Z4) entre les deux zones inférieures Z3, Z4 est strictement supérieur au troisième seuil, alors on détermine une répartition localisée par tache. En particulier, pour chaque zone Z1 à Z4 de la première unité 2 pour laquelle unité de commande électronique 21 a calculé un taux de perte de transmission de courant TL(Zi) strictement supérieur au seuil principal A1, on considère que la perte de transmission est la conséquence directe d'une tache sur la zone Zi.

Afin d'estimer la position et le nombre de taches présentes dans une zone Z1 à Z4 de la première unité 2, l'unité de commande électronique 21 est configurée pour effectuer les étapes suivantes. De manière générale, on considère qu'une tache à une forme circulaire ayant un diamètre

$$\Phi = \sqrt{\frac{4TL(Zi) \times Sz}{100\pi}}$$

avec

$\Phi$ : le diamètre d'une tache (en centimètres) ;
TL(Zi) : le taux de perte de transmission de courant de la zone Zi où est située la tache ;
Sz : la surface de la zone Zi où est située la tache (en centimètre carré).

En outre, étant donné que la taille des unités 2, 3 est différente de celle des panneaux de production de la centrale, on utilise un facteur d'échelle Fs = Sr/Sc, où Sr correspond à la surface d'un module d'un panneau de production de la centrale (en centimètre carré) et Sc correspond à la surface d'une zone de réception Zi de la première unité 2.

De façon générale, on estime un nombre de taches Np du module du panneau de production en fonction de la présence d'une tache dans au moins une zone Zi de la première unité 2 et du facteur d'échelle Fs. Par exemple, on détermine le nombre de taches Np du module du panneau de production par l'équation : Np = Fs x nzi, où nzi = 0 en l'absence de tache et nzi = 1 lorsqu'une tache est présente dans la zone Zi. En d'autres termes, on considère que nzi = 0 lorsque le taux TL(Zi) de perte de transmission de courant de la zone Zi est inférieur ou égal au deuxième seuil A2 ; et que nzi = 1 lorsque le taux TL(Zi) de perte de transmission de courant de la zone Zi est strictement supérieur au deuxième seuil A2. Ainsi, on estime que lorsqu'une répartition localisée par tache est déterminée et lorsque Fs = 1, le module du panneau de production comporte une tache ; lorsque Fs = 2, le module du panneau de production comporte deux taches ; et lorsque Fs = 3, le module du panneau de production comporte trois taches.

Afin de déduire l'impact tache sur la puissance des panneaux de production de la centrale, et donc sur l'énergie produite, on considère que la tache peut être positionnée aléatoirement dans la zone Zi. Le positionnement d'une ou plusieurs taches sur le panneau de production est également aléatoire. À partir du diamètre de la tache $\Phi$ précédemment calculé, on positionne de manière virtuelle une tache ayant le diamètre calculé $\Phi$ à différents endroits du module du panneau de production. On applique une méthode algorithmique du type Monte-Carlo qui prend en compte tous les cas possibles de positionnement pour obtenir des valeurs minimum, maximum et moyenne les plus probables de perte énergétique. La méthode algorithmique du type Monte-Carlo est une méthode classique connue de l'homme du métier permettant de calculer une valeur numérique approchée en utilisant des procédés aléatoires, c'est-à-dire des techniques probabilistes. Plus particulièrement, on considère que si deux cellules photovoltaïques font partie d'une même guirlande, elles génèrent toutes les deux le même courant. De même, la position de la tache sur une même cellule n'a pas d'influence significative. Il est donc suffisant de considérer trois cas de figure : la tache est entièrement sur une cellule, la tache chevauche de cellules, ou la tache chevauche quatre cellules. Ainsi, on peut déterminer une répartition possible des taches sur un module d'un panneau de production de la manière suivante. On calcule les diamètres $\Phi$ de chaque tache présente dans une zone Zi, c'est-à-dire zone Zi de la première unité 2 pour laquelle le taux TL(Zi) de perte de transmission de courant de la zone Zi est strictement supérieur au deuxième seuil A2. Puis on calcule le nombre de taches Np du module du panneau de production à partir de l'équation Np = Fs x nzi. Pour chaque zone Zi, on réalise et on positionne une tache ayant le diamètre Φ précédemment calculé à différentes positions sur 1,2, ou 4 cellules du module du panneau de production, et on mesure les courants fournis par le module du panneau de production pour chaque position des taches. Puis on compare les courants mesurés avec le taux TL(Zi) de perte de transmission de courant de la zone Zi précédemment calculé pour estimer la position des taches la plus probable, c'est-à-dire la position d'une tache fournissant un courant le plus proche du taux TL(Zi) de perte de transmission de courant.

Afin d'améliorer la précision de la détermination de la répartition des salissures sur la première unité 2, les modules photovoltaïques 4 à 7 de la première unité 2 présentent des caractéristiques identiques, notamment en termes de taille et de nombre de cellules photovoltaïques, à celles des modules photovoltaïques 8 à 11 de la deuxième unité 3.

Un tel dispositif 1 d'estimation de production énergétique peut comprendre des unités 2, 3 ayant une taille différente de celles des panneaux photovoltaïques de production de la centrale. Avantageusement, les modules photovoltaïques 4 à 11 des unités 2, 3 ont des tailles inférieures ou égales à celles des modules photovoltaïques de production de la centrale. En particulier, en utilisant des unités 2, 3 ayant une taille inférieure à celle des panneaux de production, on facilite la réalisation et le transport des unités 2, 3.

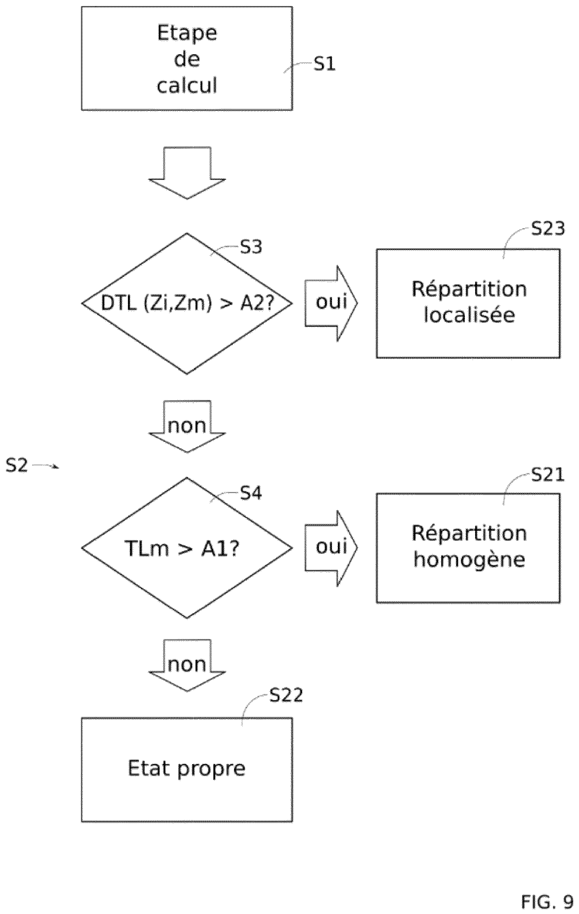

Sur la figure 9, on a représenté les étapes principales d'un procédé d'estimation de production énergétique photovoltaïque. Le procédé peut être mis en œuvre par le dispositif 1 tel que défini ci-avant. Le procédé comprend une étape initiale dans laquelle le système de protection 20 est placé dans la position de mesure, et une étape de mesure des courants fournis par chaque module photovoltaïque 4 à 11 des première et deuxième unités 2, 3. Puis, le procédé comprend une étape de calcul S1, pour chaque zone Z1 à Z4 de la première unité 2, d'un paramètre relatif à un taux de perte de transmission de courant TL(Zi) à partir d'un rapport entre le courant I(Zi) fourni par le ou les modules photovoltaïques 4 à 7 de la zone Zi de la première unité 2 et le courant I(Zj) fourni par le ou les modules photovoltaïques 8 à 11 d'une zone Zj de la deuxième unité 3. Plus particulièrement, on calcule les taux de perte de transmission de courant TL(Zi) lorsque le système de protection 20 est placé dans la position de mesure. Le procédé comprend une étape de détermination S2 d'au moins un paramètre relatif à une répartition de salissures sur la première unité 2 à partir d'une comparaison entre deux taux de perte de transmission de courant TL(Zi).

Lorsque les unités 2, 3 comprennent respectivement quatre zones de réception Z1 à Z8, l'étape de calcul S1 peut comprendre les calculs suivants :

$$TL(Z1) = 1- ( I(Z1)/I(Z5);$$

$$TL(Z2) = 1- ( I(Z2)/I(Z6);$$

$$TL(Z3) = 1- ( I(Z3)/I(Z7);$$

$$TL(Z4) = 1- ( I(Z4)/I(Z8).$$

L'étape de calcul S1 peut en outre comprendre un calcul d'une moyenne TLm des taux de perte de transmission de courant, par exemple selon l'équation 2 citée ci-avant.

L'étape de détermination S2 peut comprendre une identification d'une répartition homogène des salissures S21 lorsque la moyenne TLm est strictement supérieure au seuil principal de salissures A1, et d'un état propre S22 de la première unité 2 lorsque la moyenne TLm est inférieure ou égale au seuil principal de salissures A1. En d'autres termes, l'étape de détermination S2 comprend une comparaison S4 de la moyenne TLm avec le seuil principal de salissures A1 pour identifier une répartition des salissures.

L'étape de calcul S1 peut également comprendre un calcul d'au moins un écart de taux DTL(Zi,Zm), chaque écart de taux DTL(Zi,Zm) correspondant à une différence entre deux taux de perte de transmission de courant TL(Zi) de deux zones Z1 à Z4 de la première unité 2.

Lorsque les unités 2, 3 comprennent respectivement quatre zones de réception Z1 à Z8, l'étape de calcul S1 peut comprendre les calculs suivants :

$$DTL(Z1,Z2) = TL(Z1) - TL(Z2) ;$$

$$DTL(Z1,Z3) = TL(Z1) - TL(Z3) ;$$

$$DTL(Z2,Z3) = TL(Z2) - TL(Z3) ;$$

$$DTL(Z3,Z4) = TL(Z3) - TL(Z4).$$

En variante, on peut calculer d'autres écarts de taux supplémentaires, selon les équations suivantes :

$$DTL(Z1 ;Zbas) = TL(Z1) - (TL(Z3) + TL(Z4))/2,$$

où Zbas correspond aux zones du bas de la première unité 2 ; et

$$DTL(Z2 ;Zbas) = TL(Z2) - (TL(Z3) + TL(Z4))/2.$$

Lors du calcul des écarts de taux DTL(Zi,Zm) et des écarts de taux supplémentaires DTL(Z1 ;Zbas) et DTL(Z2 ;Zbas), on peut calculer les différences en valeur absolu, de manière à obtenir des écarts de taux ayant une valeur positive. La valeur positive des écarts de taux permet d'effectuer une seule comparaison avec le deuxième seuil de salissures A2.

L'étape de détermination S2 comprend une identification d'une répartition localisée des salissures S23 lorsqu'au moins un écart de taux DTL(Zi,Zm), ou au moins un écart de taux supplémentaire DTL(Z1 ;Zbas) et DTL(Z2 ;Zbas), est strictement supérieur au deuxième seuil de salissures A2. En d'autres termes, l'étape de détermination S2 comprend une comparaison S3 des écarts de taux DTL(Zi,Zm), DTL(Z1 ;Zbas) et DTL(Z2 ;Zbas) avec le deuxième seuil de salissures A2 pour identifier une répartition des salissures. Par ailleurs, lorsqu'au moins un écart de taux DTL(Zi,Zm) est inférieur ou égal au deuxième de salissures A2, on effectue la comparaison S4 de la moyenne TLm avec le seuil principal de salissures A1 pour identifier un état propre ou une répartition homogène des salissures.

Par ailleurs, à partir des résultats précédents, on peut estimer l'impact énergétique de la salissure des panneaux de production de la centrale photovoltaïque. Le procédé d'estimation de production énergétique photovoltaïque comprend les étapes telles que définies ci-après.

Par exemple, on calcule une perte de courant Dip (en ampère) de la première unité 2 en fonction de la répartition des salissures estimée ci-avant. On pourra ainsi estimer la perte de courant des panneaux de production, et plus particulièrement la perte de production énergétique des panneaux de production, à partir de la perte de courant Dip calculée. De manière générale, la perte de courant Dip (en ampère) de la première unité 2 est calculée en fonction du type de répartition des salissures précédemment déterminé.

Dans le cas où on détermine un état propre de la première unité 2, on estime qu'il n'y a pas de perte de courant. En d'autres termes, la perte de courant Dip est nulle, c'est-à-dire que Dip (propre) = 0 A. Ainsi, la production énergétique de la centrale n'est pas impactée.

Dans le cas où on détermine une répartition homogène des salissures, on estime que la perte de courant Dip est homogène sur toutes les cellules photovoltaïques des panneaux de production et proportionnelle à la moyenne TLm des taux de perte de transmission de courant. Ainsi, on peut calculer la perte de courant Dip (homogène) selon l'équation suivante :

$$Dip\ (homogène) = Im \times (1 - TLm),$$

où Im (en ampère) correspond à la moyenne des courants I(Zj) fournis par le ou les modules des zones Z5 à Z8 de la deuxième unité 3. En d'autres termes, Im = (I(Z1) + I(Z2) + I(Z3) + I(Z4))/4.

Dans le cas où on détermine une répartition des salissures localisée privilégiée, on estime que la perte de courant Dip (privilégiée) est proportionnelle à une moyenne TLms (sans unité) des taux de perte de transmission de courant des zones sales de la première unité 2.

On détermine qu'une zone de la première unité 2 est sale lorsque l'écart de taux DTL(Zi,Zm) de la zone est strictement supérieur au deuxième seuil A2. Au contraire, on détermine qu'une zone de la première unité 2 est propre lorsque l'écart de taux DTL(Zi,Zm) de la zone est inférieur ou égal au deuxième seuil A2.

Ainsi, on peut calculer la perte de courant Dip (privilégiée) selon l'équation suivante :

$$Dip\ (privilégiée) = Ims \times (1 - TLms),$$

où Ims (en ampère) correspond à la moyenne des courants I(Zj) fournis par le ou les modules des zones de la deuxième unité 3 correspondantes aux zones de la première unité 2 qui ont été déterminées comme sales.

Par exemple, dans le cas illustré à la figure 6, la première zone Z1 de la première unité est propre, et les autres zones Z2, Z3 et Z4 de la première unité 2 sont sales. Ainsi, les zones de la deuxième unité 3 correspondantes aux zones sales de la première unité 2, sont les zones Z6, Z7 et Z8. Dans ce cas, on calcule

$$Ims = (I(Z6)+I(Z7)+I(Z8))/3;$$

et

$$TLms = (TL(Z2) + TL(Z3) + TL(Z4))/3;$$

et

$$Dip \text{ (privilégiée)} = [ (I(Z6)+I(Z7)+I(Z8))/3 ] \times [ 1 - (TL(Z2) + TL(Z3) + TL(Z4))/3 ].$$

Les calculs de la perte de courant Dip, notamment les calculs des pertes de courant selon les différents cas de salissures, Dip (propre) ; Dip (homogène) ; Dip (privilégié), peuvent être effectués par l'unité de commande électronique 21 à partir des paramètres relatifs au taux de perte de transmission de courant précédemment calculés et à partir du type de répartition des salissures précédemment déterminé.

L'unité de commande électronique 21 peut comprendre un programme d'ordinateur comprenant des instructions pour commander le système de protection 20. Le programme d'ordinateur comprend en outre des instructions qui, lorsqu'elles sont exécutées par l'unité de commande électronique 21, permettent à l'unité de commande électronique 21 d'effectuer les étapes du procédé d'estimation de la salissure des panneaux photovoltaïques tel que défini ci-avant. En outre, l'unité de commande électronique 21 peut effectuer les étapes du procédé d'estimation de production énergétique photovoltaïque tel que défini ci-avant. L'unité de commande électronique 21 comprend un processeur ou un microprocesseur pour exécuter les instructions du programme.

Ainsi, en déterminant la configuration de la répartition des salissures, on peut estimer l'impact des salissures sur la production énergétique photovoltaïque d'une centrale. Avantageusement, on peut estimer l'impact des salissures sur une période longue de production, par exemple un trimestre ou une année, afin de faire des choix adaptés pour le nettoyage des panneaux de production et estimer le gain de production énergétique. Par exemple on peut adapter la fréquence et la nature du type de nettoyage. On peut également adapter l'architecture et la nature des panneaux de production pour une production énergétique optimisée en fonction de l'environnement. Par exemple on peut choisir une configuration des cellules en montage horizontal ou vertical, adaptée à un tel environnement. On peut également adapter la taille des panneaux, et le nombre de cellules de chaque panneau.

## Revendications

**1.** Dispositif d'estimation de la salissure de panneaux photovoltaïques, comprenant des première et deuxième unités (2, 3), chaque unité (2, 3) comprenant au moins deux zones (Z1 à Z8) de réception d'un rayonnement solaire, chaque zone (Z1 à Z8) comprenant au moins un module photovoltaïque (4 à 11), le dispositif comprenant un système de protection (20) mobile entre une position de protection dans laquelle le système de protection (20) est configuré pour masquer lesdits au moins deux zones (Z5 à Z8) de la deuxième unité (3) et une position de mesure dans laquelle lesdits au moins deux zones (Z5 à Z8) de la deuxième unité (3) sont exposées à un rayonnement solaire, et une unité de commande électronique (21) configurée pour recevoir un courant fourni par chaque module photovoltaïques (4 à 11), **caractérisé en ce que** les unités (2, 3) comportent un même nombre de zones de réception (Z1 à Z8), les modules photovoltaïques (4 à 7) de la première unité (2) présentent des caractéristiques identiques, notamment en termes de taille et de nombre de cellules photovoltaïques, à celles des modules photovoltaïques (8 à 11) de la deuxième unité (3), l'unité de commande électronique (21) est configurée pour calculer, pour chaque zone (Z1 à Z4) de la première unité (2), un paramètre relatif à un taux de perte de transmission de courant à partir d'un rapport entre le courant fourni par ledit au moins un module photovoltaïque (4 à 7) de la zone (Z1 à Z4) de la première unité (2) et le courant fourni par ledit au moins un module photovoltaïque (8 à 11) d'une zone (Z5 à Z8) de la deuxième unité (3), et **en ce que** l'unité de commande électronique (21) est configurée pour déterminer au moins un paramètre relatif à une répartition de salissures sur la première unité (2) à partir d'au moins une comparaison entre deux taux de perte de transmission de courant .

**2.** Dispositif selon la revendication 1, dans lequel l'unité de commande électronique (21) est en outre configurée pour calculer une moyenne des taux de perte de transmission de courant, et pour déterminer une répartition homogène des salissures lorsque la moyenne est strictement supérieure à un seuil principal, dit seuil principal de salissures, et un état propre de la première unité (2), dépourvu de salissures, lorsque la moyenne est inférieure ou égale au seuil principal de salissures.

**3.** Dispositif selon la revendication 2, dans lequel l'unité de commande électronique (21) est configurée pour calculer au moins un écart de taux, chaque écart de taux correspondant à une différence entre deux taux de perte de transmission de courant desdits au moins deux zones (Z1 à Z4) de la première unité (2), l'unité de commande électronique (21) étant en outre configurée pour déterminer une répartition localisée des salissures lorsqu'au moins un écart de taux est strictement supérieur à un deuxième seuil, dit deuxième seuil de salissures.

**4.** Dispositif selon la revendication 3, dans lequel chaque unité (2, 3) comprend une première zone (Z1, Z5) dite supérieure et des deuxième et troisième zones (Z3, Z4 et Z7, Z8) dites inférieures, l'unité de commande électronique (21) est en outre configurée pour déterminer une répartition localisée privilégiée sur les zones inférieures (Z3, Z4) de la première unité (2) lorsque l'écart de taux entre les deux zones inférieures (Z3, Z4) est inférieur ou égal à un troisième seuil, dit troisième seuil de salissures.

**5.** Dispositif selon la revendication 4, dans lequel chaque unité (2, 3) comprend une quatrième zone (Z2, Z6), dite intermédiaire, située entre la première zone (Z1, Z5) et les deuxième et troisième zones (Z3, Z4 et Z7, Z8).

**6.** Système d'estimation de production énergétique photovoltaïque, comprenant un dispositif d'estimation de la salissure de panneaux photovoltaïques selon l'une des revendications 1 à 5, dans lequel l'unité de commande électronique (21) du dispositif d'estimation est configurée pour calculer une perte de courant (Dip) de la première unité (2) à partir dudit au moins un paramètre relatif à une répartition de salissures sur la première unité (2).

**7.** Centrale photovoltaïque comprenant une pluralité de panneaux de production, chaque panneau de production comprenant au moins un module photovoltaïque, dit de production, destiné à produire de l'électricité, la centrale photovoltaïque comprenant au moins un dispositif d'estimation selon l'une quelconque des revendications 1 à 5.

**8.** Centrale selon la revendication 7, dans laquelle les modules photovoltaïques (4 à 11) des unités (2, 3) du dispositif d'estimation ont des tailles inférieures ou égales à celles des modules photovoltaïques de production de la centrale.

**9.** Procédé d'estimation de la salissure de panneaux photovoltaïques utilisant un dispositif d'estimation selon l'une des revendications 1 à 5, **caractérisé en ce qu'**il comporte une étape initiale dans laquelle le système de protection (20) est dans la position de mesure, une étape de mesure des courants fournis par chaque module photovoltaïque (4 à 11) des première et deuxième unités (2, 3), une étape de calcul, pour chaque zone (Z1 à Z4) de la première unité (2), d'un paramètre relatif à un taux de perte de transmission de courant à partir d'un rapport entre le courant fourni par ledit au moins un module photovoltaïque (4 à 7) de la zone (Z1 à Z4) de la première unité (2) et le courant fourni par ledit au moins un module photovoltaïque (8 à 11) d'une zone (Z5 à Z8) de la deuxième unité (3), et une étape de détermination d'au moins un paramètre relatif à une répartition de salissures sur la première unité (2) à partir d'au moins une comparaison entre deux taux de perte de transmission de courant.

**10.** Procédé selon la revendication 9, dans lequel l'étape de calcul comprend un calcul d'une moyenne des taux de perte de transmission de courant, et l'étape de détermination comprend une identification d'une répartition homogène des salissures lorsque la moyenne est strictement supérieure à un seuil principal, dit seuil principal de salissures, et d'un état propre de la première unité (2), dépourvu de salissures, lorsque la moyenne est inférieure ou égale au seuil principal de salissures.

**11.** Procédé selon la revendication 10, dans lequel l'étape de calcul comprend un calcul d'au moins un écart de taux, chaque écart de taux correspondant à une différence entre deux taux de perte de transmission de courant desdits au moins deux zones (Z1 à Z4) de la première unité (2), et l'étape de détermination comprend une identification d'une répartition localisée des salissures lorsqu'au moins un écart de taux est strictement supérieur à un deuxième seuil, dit deuxième seuil de salissures.

**12.** Procédé selon la revendication 11, dans lequel chaque unité (2, 3) du dispositif d'estimation comprend une première zone (Z1, Z5) dite supérieure et des deuxième et troisième zones (Z3, Z4 et Z7, Z8) dites inférieures, et l'étape de détermination comprend une identification d'une répartition localisée privilégiée sur les zones inférieures (Z3, Z4) de la première unité (2) lorsque l'écart de taux entre les deux zones inférieures (Z3, Z4) est inférieur ou égal à un troisième seuil, dit troisième seuil de salissures.

**13.** Procédé d'estimation de production énergétique photovoltaïque, comprenant une estimation de la salissure de panneaux photovoltaïques selon l'une des revendications 9 à 12, et un calcul d'une perte de courant (Dip) de la première unité (2) à partir dudit au moins un paramètre relatif à une répartition de salissures sur la première unité (2).

**14.** Produit programme d'ordinateur comprenant des instructions qui, lorsqu'elles sont exécutées par une unité de commande électronique (21), permettent à l'unité de commande électronique (21) d'effectuer les étapes du procédé d'estimation de la salissure de panneaux photovoltaïques selon l'une quelconque des revendications 9 à 12.

**15.** Produit programme d'ordinateur selon la revendication 14, comprenant des instructions qui, lorsqu'elles sont exécutées par l'unité de commande électronique (21), permettent à l'unité de commande électronique (21) d'effectuer les étapes du procédé d'estimation de production énergétique photovoltaïque selon la revendication 13.

**Patentansprüche**

**1.** Vorrichtung zum Schätzen der Verschmutzung von Fotovoltaiktafeln, die eine erste und eine zweite Einheit (2, 3) umfasst, wobei jede Einheit (2, 3) mindestens zwei Zonen (Z1 bis Z8) zum Aufnehmen einer Sonnenstrahlung umfasst, wobei jede Zone (Z1 bis Z8) mindestens ein Fotovoltaikmodul (4 bis 11) umfasst, wobei die Vorrichtung ein Schutzsystem (20) umfasst, das zwischen einer Schutzposition, in der das Schutzsystem (20) dazu konfiguriert ist, die mindestens zwei Zonen (Z5 bis Z8) der zweiten Einheit (3) abzudecken, und einer Messposition, in der die mindestens zwei Zonen (Z5 bis Z8) der zweiten Einheit (3) einer Sonnenstrahlung ausgesetzt ist, beweglich ist, und eine elektronische Steuereinheit (21), die dazu konfiguriert ist, einen Strom zu empfangen, der von jedem Fotovoltaikmodul (4 bis 11) geliefert wird, **dadurch gekennzeichnet, dass** die Einheiten (2, 3) dieselbe Anzahl von Empfangszonen (Z1 bis Z8) umfassen, die Fotovoltaikmodule (4 bis 7) der ersten Einheit (2) identische Merkmale insbesondere hinsichtlich der Größe und der Anzahl fotovoltaischer Zellen wie diejenigen der Fotovoltaikmodule (8 bis 11) der zweiten Einheit (3) aufweisen, die elektronische Steuereinheit (21) dazu konfiguriert ist, für jede Zone (Z1 bis Z4) der ersten Einheit (2) einen Parameter bezüglich einer Stromübertragungsverlustrate ausgehend von einem Verhältnis zwischen dem von dem mindestens einen Fotovoltaikmodul (4 bis 7) der Zone (Z1 bis Z4) der ersten Einheit (2) gelieferten Strom und dem Strom zu berechnen, der von dem mindestens einen Fotovoltaikmodul (8 bis 11) einer Zone (Z5 bis Z8) der zweiten Einheit (3) geliefert wird, und dass die elektronische Steuereinheit (21) dazu konfiguriert ist, mindestens einen Parameter bezüglich einer Verteilung von Verschmutzungen auf der ersten Einheit (2) ausgehend von mindestens einem Vergleich zwischen zwei Stromübertragungsverlustraten zu bestimmen.

**2.** Vorrichtung nach Anspruch 1, wobei die elektronische Steuereinheit (21) außerdem dazu konfiguriert ist, einen Durchschnitt der Stromübertragungsverlustraten zu berechnen und eine homogene Verteilung der Verschmutzungen zu bestimmen, wenn der Durchschnitt strikt größer ist als eine Hauptschwelle, als Verschmutzungshauptschwelle bezeichnet, und einen sauberen Zustand der ersten Einheit (2), die keine Verschmutzungen aufweist, zu bestimmen, wenn der Durchschnitt kleiner oder gleich der Verschmutzungshauptschwelle ist.

**3.** Vorrichtung nach Anspruch 2, wobei die elektronische Steuereinheit (21) dazu konfiguriert ist, mindestens eine Ratenabweichung zu berechnen, wobei jede Ratenabweichung einem Unterschied zwischen zwei Stromübertragungsverlustraten der mindestens zwei Zonen (Z1 bis Z4) der ersten Einheit (2) entspricht, wobei die elektronische Steuereinheit (21) außerdem dazu konfiguriert ist, eine lokale Verteilung der Verschmutzungen zu bestimmen, wenn mindestens eine Ratenabweichung strikt größer ist als eine zweite Schwelle, die als zweite Verschmutzungsschwelle bezeichnet wird.

**4.** Vorrichtung nach Anspruch 3, wobei jede Einheit (2, 3) eine erste Zone (Z1, Z5), als obere Zone bezeichnet, und der zweiten und dritten Zone (Z3, Z4 und Z7, Z8), wie als untere Zonen bezeichnet wird, umfasst, wobei die elektronische Steuereinheit (21) außerdem dazu konfiguriert ist, eine bevorzugte lokale Verteilung auf den unteren Zonen (Z3, Z4) der ersten Einheit (2) zu bestimmen, wenn die Ratenabweichung zwischen die zwei unteren Zonen (Z3, Z4) kleiner oder gleich einer dritten Schwelle, die als dritte Verschmutzungsschwelle bezeichnet wird, ist.

**5.** Vorrichtung nach Anspruch 4, wobei jede Einheit (2, 3) eine vierte Zone (Z2, Z6), die als Zwischenzone bezeichnet wird, umfasst, die zwischen der ersten Zone (Z1, Z5) und der zweiten und der dritten Zone (Z3, Z4 und Z7, Z8) liegt.

**6.** System zum Schätzen der Fotovoltaikenergieproduktion, das eine Vorrichtung zum Schätzen der Verschmutzung von Fotovoltaiktafeln nach einem der Ansprüche 1 bis 5 umfasst, wobei die elektronische Steuereinheit (21) der Schätzungsvorrichtung dazu konfiguriert ist, einen Stromverlust (Dip) der ersten Einheit (2) ausgehend von dem mindestens einen Parameter bezüglich einer Verteilung von Verschmutzungen auf der ersten Einheit (2) zu berechnen.

**7.** Fotovoltaikanlage, die eine Vielzahl von Produktionstafeln umfasst, wobei jede Produktionstafel mindestens ein Fotovoltaikmodul, die als Produktionsmodul bezeichnet wird, umfasst, das dazu bestimmt ist, Elektrizität zu erzeugen, wobei die Fotovoltaikanlage mindestens eine Schätzungsvorrichtung nach einem der Ansprüche 1 bis 5 umfasst.

8. Anlage nach Anspruch 7, wobei die Fotovoltaikmodule (4 bis 11) der Einheiten (2, 3) der Schätzungsvorrichtung Größen kleiner oder gleich denjenigen der Produktionsfotovoltaikmodule der Anlage aufweisen.

9. Verfahren zum Schätzen der Verschmutzung von Fotovoltaiktafeln, das eine Schätzungsvorrichtung nach einem der Ansprüche 1 bis 5 verwendet, **dadurch gekennzeichnet, dass** es einen anfänglichen Schritt, in dem das Schutzsystem (20) in der Messposition ist, einen Messschritt der Ströme, die von jedem Fotovoltaikmodul (4 bis 11) der ersten und zweiten Einheit (2, 3) geliefert werden, einen Berechnungsschritt für jede Zone (Z1 bis Z4) der ersten Einheit (2) eines Parameters bezüglich einer Stromübertragungsverlustrate ausgehend von einem Verhältnis zwischen dem Strom, der von dem mindestens einen Fotovoltaikmodul (4 bis 7) der Zone (Z1 bis Z4) der ersten Einheit (2) geliefert wird, und dem Strom, der von dem mindestens einen Fotovoltaikmodul (8 bis 11) einer Zone (Z5 bis Z8) der zweiten Einheit (3) geliefert wird, und einen Bestimmungsschritt mindestens eines Parameters bezüglich einer Verteilung von Verschmutzungen auf der ersten Einheit (2) ausgehend von mindestens einem Vergleich zwischen zwei Stromübertragungsverlustraten umfasst.

10. Verfahren nach Anspruch 9, wobei der Berechnungsschritt eine Berechnung eines Durchschnitts der Stromübertragungsverlustraten umfasst, und der Bestimmungsschritt eine Identifikation einer homogenen Verteilung der Verschmutzungen umfasst, wenn der Durchschnitt strikt größer als eine Hauptschwelle ist, die als Hauptschwelle der Verschmutzungen bezeichnet wird, und einen sauberen Zustand der ersten Einheit (2) ohne Verschmutzungen, wenn der Durchschnitt kleiner oder gleich der Hauptschwelle von Verschmutzungen ist.

11. Verfahren nach Anspruch 10, wobei der Berechnungsschritt eine Berechnung mindestens einer Ratenabweichung umfasst, wobei jede Ratenabweichung einem Unterschied zwischen zwei Stromübertragungsverlustraten der mindestens zwei Zonen (Z1 bis Z4) der ersten Einheit (2) entspricht, und der Bestimmungsschritt eine Identifikation einer lokalen Verteilung der Verschmutzungen umfasst, wenn mindestens eine Ratenabweichung strikt größer ist als eine zweite Schwelle, die als zweite Verschmutzungsschwelle bezeichnet wird.

12. Verfahren nach Anspruch 11, wobei jede Einheit (2, 3) der Schätzungsvorrichtung eine erste Zone (Z1, Z5), die als obere Zone bezeichnet wird, und eine zweite und dritte Zone (Z3, Z4 und Z7, Z8), die als untere Zonen bezeichnet werden, umfasst, und der Bestimmungsschritt eine Identifikation einer bevorzugten lokalen Verteilung auf den unteren Zonen (Z3, Z4) der ersten Einheit (2) umfasst, wenn die Ratenabweichung zwischen den beiden unteren Zonen (Z3, Z4) kleiner oder gleich einer dritten Schwelle, die als dritte Verschmutzungsschwelle bezeichnet wird, ist.

13. System zum Schätzen der Fotovoltaikenergieproduktion, das eine Schätzung der Verschmutzung von Fotovoltaiktafeln nach einem der Ansprüche 9 bis 12 und eine Berechnung eines Stromverlusts (Dip) der ersten Einheit (2) ausgehend von mindestens einem Parameter bezüglich einer Verteilung von Verschmutzungen auf der ersten Einheit (2) umfasst.

14. Computerprogrammprodukt, das Anweisungen umfasst, die, wenn sie von einer elektronischen Steuereinheit (21) ausgeführt werden, es der elektronischen Steuereinheit (21) erlauben, die Schritte des Verfahrens zum Schätzen der Verschmutzung von Fotovoltaiktafeln nach einem der Ansprüche 9 bis 12 durchzuführen.

15. Computerprogrammprodukt, nach Anspruch 14, das Anweisungen umfasst, die, wenn sie von der elektronischen Steuereinheit (21) ausgeführt werden, es der elektronischen Steuereinheit (21) erlauben, die Schritte des Fotovoltaikenergieproduktions-Schätzungsverfahrens nach Anspruch 13 durchzuführen.

**Claims**

1. Device for estimating the soiling of photovoltaic panels, comprising first and second units (2, 3), each unit (2, 3) comprising at least two zones (Z1 to Z8) for receiving a solar radiation, each zone (Z1 to Z8) comprising at least one photovoltaic module (4 to 11), the device comprising a protection system (20) moveable between a protection position, wherein the protection system (20) is configured to mask said at least two zones (Z5 to Z8) of the second unit (3) and a measuring position, wherein said at least two zones (Z5 to Z8) of the second unit (3) are exposed to a solar radiation, and an electronic control unit (21) configured to receive a current supplied by each photovoltaic module (4 to 11), **characterised in that** the units (2, 3) comprise one same number of receiving zones (Z1 to Z8), the photovoltaic modules (4 to 7) of the first unit (2) have identical features, in particular in terms of size and of number of photovoltaic cells, to those of the photovoltaic modules (8 to 11) of the second unit (3), the electronic control unit (21) is configured to calculate, for each zone (Z1 to Z4) of the first unit (2), a parameter relating to a current transmission loss rate from a rate between the current supplied by said at least one photovoltaic module (4 to 7) of the zone (Z1 to Z4) of the first unit (2) and the current supplied by said at least one photovoltaic module (8 to 11) of a zone (Z5 to Z8) of the second unit (3), and **in that** the electronic control unit (21) is configured to determine at least one parameter relating to a distribution of soiling on the first unit (2) from at least one comparison between two current transmission loss rates.

2. Device according to claim 1, wherein the electronic control unit (21) is further configured to calculate an average of the current transmission loss rates, and to determine a homogeneous distribution of soiling when the average is strictly greater than a main threshold, called main soiling threshold, and a clean state of the first unit (2), with no soiling, when the average is less than or equal to the main soiling threshold.

3. Device according to claim 2, wherein the electronic control unit (21) is configured to calculate at least one rate difference, each rate difference corresponding to a different between two current transmission loss rates of said at least two zones (Z1 to Z4) of the first unit (2), the electronic control unit (21) being further configured to determine a localised distribution of soiling when at least one rate difference is strictly greater than a second threshold, called second soiling threshold.

4. Device according to claim 3, wherein each unit (2, 3) comprises a first so-called upper zone (Z1, Z5) and of the second and third so-called lower zones (Z3, Z4 and Z7, Z8), the electronic control unit (21) is further configured to determine a favoured localised distribution on the lower zones (Z3, Z4) of the first unit (2) when the rate difference between the two lower zones (Z3, Z4) is less than or equal to a third threshold, called third soiling threshold.

5. Device according to claim 4, wherein each unit (2, 3) comprises a fourth so-called intermediate zone (Z2, Z6), located between the first zone (Z1, Z5) and the second and third zones (Z3, Z4 and Z7, Z8).

6. System for estimating photovoltaic energy production, comprising a device for estimating the soiling of photovoltaic panels according to any one of claims 1 to 5, wherein the electronic control unit (21) of the estimation device is configured to calculate a current loss (Dip) of the first unit (2) from said at least one parameter relating to a distribution of soiling on the first unit (2).

7. Photovoltaic unit comprising a plurality of production panels, each production panel comprising at least one so-called production photovoltaic module, intended to produce electricity, the photovoltaic unit comprising at least one estimation device according to any one of claims 1 to 5.

8. Unit according to claim 7, wherein the photovoltaic modules (4 to 11) of the units (2, 3) of the estimation device have sizes less than or equal to those of the photovoltaic modules for producing the unit.

9. Method for estimating the soiling of photovoltaic panels using an estimation device according to any one of claims 1 to 5, **characterised in that** it comprises an initial step, wherein the protection system (20) is in the measuring position, a step of measuring currents supplied by each photovoltaic module (4 to 11) of the first and second units (2, 3), a calculation step, for each zone (Z1 to Z4) of the first unit (2), of a parameter relating to a current transmission loss rate from a ratio between the current supplied by said at least one photovoltaic module (4 to 7) of the zone (Z1 to Z4) of the first unit (2) and the current supplied by said at least one photovoltaic module (8 to 11) of a zone (Z5 to Z8) of the second unit (3), and a step of determining at least one parameter relating to a distribution of soiling on the first unit (2) from at least one comparison between two current transmission loss rates.

10. Method according to claim 9, wherein the calculation step comprises a calculation of an average of the current transmission loss rates, and the determination step comprises an identification of a homogeneous distribution of soiling when the average is strictly greater than a main threshold, called main soiling threshold, and of a clean state of the first unit (2), with no soiling, when the average is less than or equal to the main soiling threshold.

11. Method according to claim 10, wherein the calculation step comprises a calculation of at least one rate difference, each rate difference corresponding to a difference between two current transmission loss rates of said at least two zones (Z1 to Z4) of the first unit (2), and the determination step comprises an identification of a localised distribution of soiling when at least one rate difference is strictly greater than a second threshold, called second soiling threshold.

12. Method according to claim 11, wherein each unit (2, 3) of the estimation device comprises a first so-called upper zone (Z1, Z5) and second and third so-called lower zones (Z3, Z4 and Z7, Z8), and the determination step comprises an identification of a favoured localised distribution on the lower zones (Z3, Z4) of the first unit (2) when the rate difference between the two lower zones (Z3, Z4) is less than or equal to a third threshold, called third soiling threshold.

13. Method for estimating photovoltaic energy production, comprising an estimation of the soiling of photovoltaic panels, according to any one of claims 9 to 12, and a calculation of a current loss (Dip) of the first unit (2) from said at least one parameter relating to a distribution of soiling on the first unit (2).

14. Computer program product comprising instructions which, when they are executed by an electronic control unit (21), making it possible for the electronic control unit (21) to carry out the steps of the method for estimating the soiling of photovoltaic panels according to any one of claims 9 to 12.

15. Computer program product according to claim 14, comprising instructions which, when they are executed by the electronic control unit (21), making it possible for the electronic control unit (21) to carry out the steps of the method for estimating photovoltaic energy production according to claim 13.

FIG. 1

FIG. 2

EP 4 473 651 B1

18

FIG. 3

FIG. 4

FIG. 5

FIG. 6

FIG. 7

FIG. 8

Etape
de
calcul — S1

DTL (Zi,Zm) > A2? —S3

oui → Répartition localisée — S23

non

S2 →

TLm > A1? —S4

oui → Répartition homogène — S21

non

Etat propre — S22

FIG. 9

**RÉFÉRENCES CITÉES DANS LA DESCRIPTION**

**Documents brevets cités dans la description**

- CN 110266269
- US 2017338771 A1
- US 10720882 B
- WO 2020144618 A
- US 10337201 B
- WO 2014061967 A
- US 10554171 B
- IN 201941047730
- WO 2019158982 A
- KR 102262361